# EUROPEAN PATENT APPLICATION

(11) **EP 1 128 541 A2**
(43) Date of publication of application: **29.08.2001**
(21) Application number: 01830091.3
(22) Date of filing: 13.02.2001
(51) Int. Cl.: H02N 1/00

(54) **Electrostatic motor comprising coaxial cylindrical stator and rotor, with an interposed out-of-axis diaphragm for driving the rotor**

(30) Priority: 24.02.2000 IT TO200178
(71) Applicant: C.R.F. Societa' Consortile per Azioni, 10043 Orbassano (Torino) (IT)
(72) Inventor: Pizzi, Marco, c/o C.R.F. Società, 10043 Orbassano (Torino) (IT)
(74) Representative: Notaro, Giancarlo

(57) **Abstract**

Electrostatic motor comprising a tubular cylindrical stator which internal surface carries a circular set of electrodes (4). A cylindrical rotor (5) which is supported so to turn co-axially inside the stator. A tubular offset membrane (7) is interposed between stator and rotor. Furthermore, devices (9) for providing an electrical voltage between the membrane (7) and, in sequence, the various electrodes (4) of the stator along the circumference of the stator, so to make the membrane (7) adhere by electrostatic effect to the portion of the stator (2) carrying the electrode (4) which is powered at that time, thus obtaining a rolling movement of the membrane (7) inside the stator. This movement causes a rotation of the rotor (5) around its axis by means of flexible tie-rod connection devices (8).

## Description

This invention relates to electrostatic motors. Low power, small sized electrostatic motors, suitable for use as actuators in micro-electronic technology applications, for operating mechanical devices and similar, in conditions in which vibrations occur, such as, for example, in automotive applications, have previously been made. This electrostatic actuators make use of electrically conducting, flexible plates, also called lashes or petals, each a stator associated to one extremity and a rotor associated to the opposite extremity. The application of voltage pulses between the petals and an electrode associated to the rotor causes adhesion by electrostatic effect of the petals to the rotor, with consequent movement of the latter with respect to the stator. The application has deposited various patents which refer to this technology (see, for example, EP-A0 837 550, EP-A-0 837 551).

The purpose of this invention is to realise an electrostatic motor of the type described above which exploits a completely different operating principle, and which is simple and efficient.

In order to achieve this purpose, this invention relates to an electrostatic motor comprising:
- a stator which shape is tubular cylindrical and which internal surface carries a circular set of electrodes covered by a layer of dielectric coating,
- a cylindrical rotor which is supported so to turn co-axially inside the stator,
- a tubular membrane, comprising at least one electrically conducting layer, which diameter is intermediate between the external diameter of the rotor and the internal diameter of the stator, interposed between stator and rotor and connected to the rotor by means of flexible tie-rod connection devices, and
- devices for providing an electrical voltage between the membrane and, in sequence, the various electrodes of the stator along the circumference of the stator, so to make the membrane adhere by electrostatic effect to the portion of the stator carrying the electrode which is powered at that time, thus obtaining a rolling movement of the membrane inside the stator which causes a rotation of the rotor around its axis by means of said flexible tie-rod connection devices.

Said membrane can be either entirely metallic or a polymeric membrane with a metallic coating. The thickness of the membrane can be compressed in range from a few tenths of a micron to ten microns. The conductive coating of the stator forming the electrodes can also have a thickness which is included in the range from a few tenths of a micron to a few microns.

Preferably, the separation line between adjacent pairs electrodes of the stator is a zigzag line, for example a broken or wavy line, which ensures correct rolling of the membrane in the stator progressively as the power voltage passes from one electrode to the other.

Characteristics and advantages of this invention will be illustrated with reference to a preferred embodiment as non-limiting examples in the enclosed drawings, whereas:
- figure 1 is a schematic section view of an electrostatic motor according to this invention,
- figure 2 is a larger scale view of the detail shown in figure 1, and

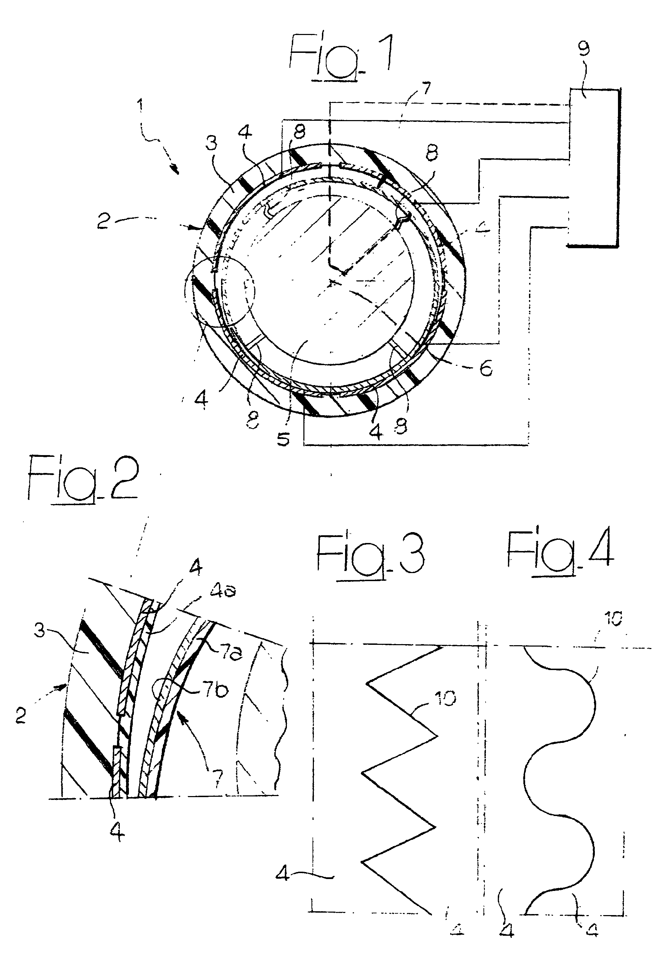

- figures 2 and 4 illustrate the view according to the arrow III in figure 1 on a larger scale according to two forms of embodiment.

With reference to drawings, number 1 indicates an electrostatic motor according to this invention, comprising a stator 2 which shape is tubular cylindrical. The stator 2 comprises a substrate 3 of any material, for example plastic material, bearing on the internal surface a circular set of electrodes 4 covered by a layer 5 of dielectric material. In this illustrated example, there are four electrodes 4, consisting of longitudinal plates which extend in parallel to the axis of the cylindrical body of the stator of its entire length.

The stator 2 supports a cylindrical rotor 5 so that it can turn (by means of supports which are not illustrated in the figure), which axis 6 is also the axis of the stator 2. An electrically conducting membrane 7 is interposed between the stator and the rotor, the diameter of the membrane being intermediate between the external diameter of the rotor 5 and the internal diameter of the stator 2 and connected to the rotor by means of flexible tie-rods 8. The membrane 7 can be entirely metallic, or, as shown for example in figure 2, it can consists of a polymeric layer 7a with a metallic coating 7b, or a silicon membrane, made by employing typical MEMS (Micro-Electro-Mechanical Systems) processes, such as photolithography, etching, etc.

Furthermore, the motor comprises devices 9 for providing an electrical voltage between the membrane 7 and the electrodes 4 of the stator. The electrical connections of the power supply means 9 to the electrodes 4 of the membrane 7 are illustrated only schematically in the accompanying drawings. Said constructive details are not herein illustrated between they can be made in any known way and for this reason, taken separately, are not included in the scope of this invention. Furthermore, the elimination of these details from the drawings make the drawings easier to understand.

The various electrodes 4 on the stator are powered in sequence, one after the other, along the circumference of the stator. Following the existence of a voltage between the membrane 7 and said electrodes, the membrane adheres to the stator in the position where the electrode being powered at that time (as shown in figure 1, 2). Powering the various electrodes 4 in sequence causes the membrane 7 to roll inside the stator. The contact between membrane and stator is always partial, because the surface of the membrane is smaller than the internal surface of the stator. After a complete turn of the membrane, the latter is rotated with respect to the previous position by a length which is equal to the difference between the circumference of the membrane and the internal circumference of the stator. The rolling movement of the membrane causes a rotation of the rotor 5 around its axis (in the direction opposite to the rotation of the membrane on itself) caused by the connection formed by the flexible tie-rods 8. Naturally the rotor 5 is equipped with a shaft consequently allowing the transmission of a torque to a driven unit. The dimensions, the number of electrodes, the type of connection between the membrane and the rotor can vary widely with respect to that illustrated herein as non-limiting example.

To favour the passage of contact from the membrane from one electrode to the other by electrostatic effect, the demarcation 10 between each pair of adjacent electrodes can be sawed (figure 3) or wavy (figure 4). In this way, the membrane partially overlaps the electrode on which it rolls and the electrostatic adhesion is favoured.

Naturally, numerous changes can be implemented to the construction and forms of embodiment of the invention herein envisaged, all comprised within the context of the concept characterising this invention.

## Claims

1. Electrostatic motor comprising:
- a stator (2) which shape is tubular cylindrical and which internal surface carries a circular set of electrodes (4) covered by a layer of dielectric coating (4a),
- a cylindrical rotor (5) which is supported so to turn co-axially inside the stator (2),
- a tubular membrane (7), comprising at least one electrically conducting layer (7b), which diameter is intermediate between the external diameter of the rotor (5) and the internal diameter of the stator (2), interposed between stator (2) and rotor (5) and connected to the rotor (5) by means of flexible tie-rod connection devices (8), and
- devices (9) for providing an electrical voltage between the membrane (7) and, in sequence, the various electrodes (4) of the stator (2) along the circumference of the stator, so to make the membrane (7) adhere by electrostatic effect to the portion of the stator (2) carrying the electrode (4) which is powered at that time, thus obtaining a rolling movement of the membrane (7) inside the stator (2) which causes a rotation of the rotor (5) around its axis by means of said flexible tie-rod connection devices (8).

2. Motor according to claim 1, characterised in that said membrane (7) is entire metallic.

3. Motor according to claim 1, characterised in that said membrane (7) is a polymeric membrane (7a) with a metallic coating (7b) or made of silicon.

4. Motor according to claim 1, characterised in that said membrane (7) has a thickness which is comprised in the range from a few tenths of a micron to ten microns.

5. Motor according to claim 1, characterised in that the stator (2) has a conductive coating forming the electrodes (4) which thickness is comprised in the range from a few tenths of a micron to a few microns.

6. Motor according to claim 1, characterised in that the demarcation line between each pair of adjacent electrodes (4) is a zigzag line (10).
